# EUROPEAN PATENT SPECIFICATION

(11) **EP 2 702 430 B1**
(45) Date of publication and mention of the grant of the patent: **13.01.2016**
(21) Application number: 12726487.7
(22) Date of filing: 26.04.2012
(51) Int. Cl.: G01S 19/51, G01S 19/17, G01S 19/19, G01V 9/00

(54) **METHOD FOR ASSESSING THE RELIABILITY OF A DOG-MAN PAIR AND KIT FOR IMPLEMENTING SAID METHOD**
VERFAHREN ZUR BEURTEILUNG DER ZUVERLÄSSIGKEIT EINES HUND-MENSCH-PAARES UND KIT ZUR DURCHFÜHRUNG DES VERFAHRENS
PROCÉDÉ POUR ÉVALUER LA FIABILITÉ D'UN COUPLE CHIEN-MAÎTRE, ET TROUSSE POUR METTRE EN OEUVRE LEDIT PROCÉDÉ

(30) Priority: 26.04.2011 IT VI20110106
(43) Date of publication of application: 05.03.2014
(73) Proprietor: Giacomelli, Fabio, 36014 Santorso (VI) (IT)
(72) Inventor: Giacomelli, Fabio, 36014 Santorso (VI) (IT)
(74) Representative: Bonini, Ercole
(86) International application number: PCT/IB2012/000811
(87) International publication number: WO 2013/150328

(56) References cited:
- EP-A1- 1 927 869
- EP-A1- 1 942 342
- EP-A1- 1 988 522
- CH-B1- 698 873
- US-B1- 6 310 553
- NONE: "GPS Dogs to the Rescue", INTERNET CITATION, April 1997 (1997-04), XP002476385, Retrieved from the Internet: URL:http://www.govtech.com/gt/print_articl e.php?id=95307 [retrieved on 2008-04-14]

## Description

The present invention concerns a method for assessing the reliability of a dog-man pair, preferably a technical dog-man pair.

The present invention also concerns data processing software capable of carrying out some or all of the steps of said method of the invention.

Finally, the invention also concerns a kit for implementing said method of the invention.

It is known that the term "dog-man pair" indicates the pair constituted by a dog and its human leader. It is important to underline, therefore, that also in this context the above mentioned term is referred to the dog-leader pair in its most general meaning.

This category, therefore, includes also the dog-leader pair in which, for example, the leader is a hunter and the dog is a retriever.

Instead, to indicate dog-man pairs suited to perform a particular task, for example the pairs belonging to the police or the army, as well as the dog-leader pairs belonging to first aid units like those used in civil protection, the term used is "technical dog-man pair".

It should be noted that the term "technical dog-man pair" will be used herein with the last meaning just explained above.

It is known that in each individual dog-man pair the leader gives commands to the dog so that the latter can perform the special task for which it has been trained in the best possible way.

The task usually performed by the dog consists in looking for living beings or objects, for which the dog exploits it well-developed, exceptional sense of smell.

Search operations, as already mentioned, can be carried out in various sectors, from the most important ones, for example when it comes to searching for missing persons and/or persons in danger, to the ones most related to leisure, for example when it comes to searching for a prey hunted by the leader/hunter or to searching for mushrooms or truffles.

It is also known that before the dog gets used to listening to and obeying the leader's orders and learns how to perform its tasks, the dog-man pair needs long and demanding training.

In particular, in the case of technical dog-man pairs trained to search for living beings, preferably human beings, the dog and the leader must be capable of exploring a predefined search area thoroughly and perfectly, with no risk of leaving one or more zones within said area unexplored.

Therefore, in order to assess the reliability of a dog-man pair or technical dog-man pair, test days are periodically organized, during which one or more guinea pigs is/are placed in a predefined search area and each dog-man pair must perform its search in turn.

The persons in charge with the test must then assess, among other things, whether the dog-man pair has properly explored the entire predefined search area and the dog has kept a suitable distance from the leader during the search.

Up to date it is known that the persons who have to assess the reliability of a dog-man pair have few objective parameters at their disposal to make their assessment.

In fact, the persons in charge with the test usually find a strategic position with respect to the predefined search area and from there they observe the movements of the dog-man pair and in particular the movements of the dog with respect to its leader.

It is clear, therefore, that the assessment considerably depends on the experience of the person who observes the work of the dog-man pair. Furthermore, in many cases the person performing the assessment expresses different opinions, which in some cases are even conflicting, regarding the same dog-man pair.

The assessment inevitably gives varying results, since the person who has to assess the work of the dog-man pair expresses his/her opinion based on subjective sensations, which may be different at different moments.

Thus, disadvantageously, in general the assessment is not based on objective data and therefore it tends to change in a manner that sometimes is incomprehensible even to experts in the field.

From another point of view, it is also known that the reliability of a dog-man pair or technical dog-man pair very often is not consistent over time.

Said lack of consistency may be due to intrinsic characteristics of the dog-man pair, for example the dog can be more or less tired, and may also be affected by external situations, for example by the weather, the conditions of the ground, etc.

Disadvantageously, therefore, it is also for these reasons that the assessment of the reliability of a dog-man pair can be imprecise and sometimes even completely wrong.

Since said assessments are successively used to define the activities necessary to improve the reliability of the dog-man pair, a wrong assessment can disadvantageously lead to the definition of unsuitable activities that will not bring any improvement and in some cases may even worsen the reliability of the dog-man pair.

The article entitled "GPS Dogs to the Rescue" (XP002476385) and the documents EP1927869, EP1988522 and US6310533, belonging to the prior art, describe the use of a GNSS device applied to a dog to known the position of said dog in objective way. However, these documents don't describe a method for analyzing and comparing the detected data to assess and improve the reliability of a dog-man pair.

The present invention aims to overcome the drawbacks listed above.

In particular, the invention has the purpose of providing a method for assessing the reliability of a dog-man pair that is base on objective measurements and data.

It is thus the object of the present invention to propose a method that makes it possible to obtain an objective and consistent assessment of the reliability of a dog-man pair, given the same performance of the dog-man pair/technical dog-man pair.

Consequently, it is the object of the present invention to provide a method that makes it possible to plan one or more activities for the dog-man pair, which allow the latter to actually improve its reliability in a shorter time than is presently needed when the assessment methods of the known art are used. The objects described above are achieved by the method for assessing the reliability of a dog-man pair having the characteristics illustrated in the main claim.

These objects are also achieved by the data processing software and the kit for the implementation of the above mentioned method of the invention. Further characteristics of the method that is the subject of the invention are described in the dependent claims.

Advantageously, the method of the invention, according to which several data of a different nature are compared, all said data being measured objectively during the searching operations of a dog-man pair, ensures a deeper understanding of the causes of a given behaviour of the same dog-man pair.

In this way it is possible to advantageously speed up the progress of the dog-man pair.

Still advantageously, this method makes it possible to objectively compare the degree of reliability of different dog-man pairs/technical dog-man pairs.

The objects and advantages described above will be highlighted in greater detail in the description of a preferred embodiment of the invention that is provided as an indicative, non-limiting example, with reference to the enclosed drawings, wherein:
- Figure 1 shows the graph regarding the instant distances between dog and leader for each instant of time during the search and the value of the average distance for the entire duration of the above mentioned search;
- Figure 2 shows the graph regarding the dog's instant speed values for each instant of time when the speed has been measured during the search and the value of the average speed of the dog for the entire duration of the search;
- Figure 3 is a graphic representation of the superimposition of the layouts of the dog and leader's routes within the work area;
- Figure 4 shows the graph regarding the altitude curve of the dog's route within the work area during the search;
- Figure 5 shows the layout of the dog's route within the work area with the projection of the covered area based on the characteristics of a scent cone;
- Figure 6 schematically shows the graphic of the scent cone;
- Figure 7 shows the kit of the invention suited to assess the reliability of a dog-man pair when worn by a dog-man pair.

The method of the invention is suited to assess the reliability of a dog-man pair, preferably a technical dog-man pair, consisting of a dog and a human leader.

In order to implement the above mentioned method of the invention, both the dog and the leader of the dog-main pair/technical dog-man pair are equipped with a positioning device for measuring and storing data of the GNSS (Global Navigation Satellite System) type.

Preferably but not necessarily, said positioning devices are GPS (Global Positioning System) devices.

However, in alternative embodiments of the method of the invention said positioning devices may be of a different type.

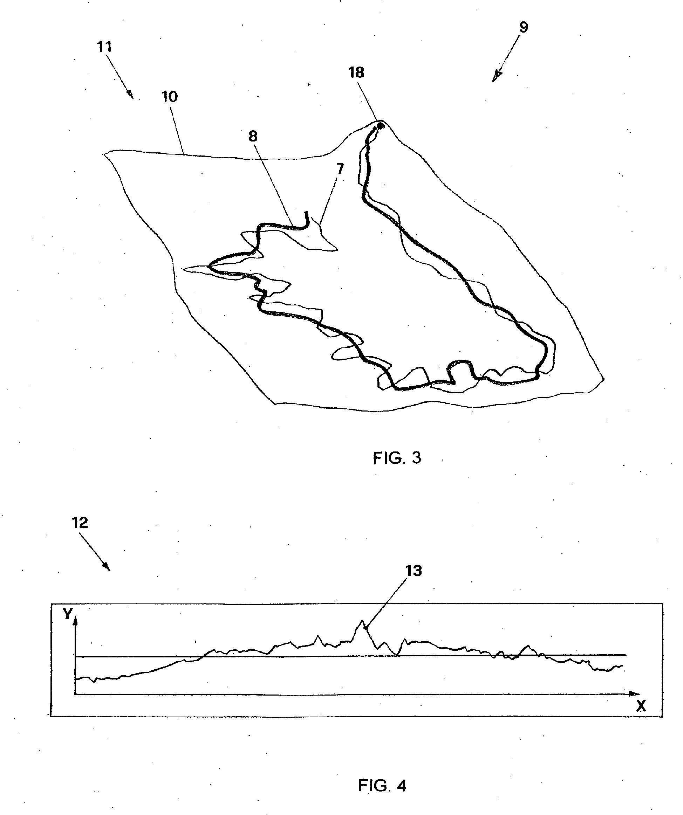

According to the invention, the above mentioned method includes a first step consisting in the definition of a work area **11** within which the dog-man pair must work, shown in Figure 3.

In particular, according to the preferred embodiment of the method, the perimeter **10** of said work area **11** is drawn on a virtual map by means of a data processing device in which a data processing application of the GIS (Geographic(al) Information System) type is applied, for example Google Earth ®.

However, it cannot be excluded that in an alternative embodiment of the invention said definition step may be carried out by drawing the perimeter **10** of said area **11** using a paper map, the layout of the perimeter being transferred to the data processing device only at the end of the search activity of the dog-man pair.

According to the preferred embodiment of the method of the invention, a guinea pig **18** is successively positioned within the predefined work area **10** and the dog-man pair has to find it out.

It cannot be excluded, however, that in different embodiments of the invention the number of the guinea pigs may exceed one.

Preferably but not necessarily, said guinea pig **18** is a human being that is positioned at a specific point within said area **11** waiting to be found by the dog-man pair in question.

It cannot be excluded that in further embodiments of the method of the invention said guinea pig **18** may be an object or an animal.

According to the method of the invention, once the definition of the work area **11** and the arrangement of the guinea pig/s **18** have been completed, the search activity of the dog-man pair to find said guinea pig **18** starts.

In particular, according to the method of the invention, during said search activity the GNSS data of the dog and the leader are measured and stored at the same time instants and according to predefined time intervals, using the already mentioned GNSS positioning devices.

In particular, according to the preferred embodiment of the invention, the GNSS data are the latitude, longitude and altitude values measured at each one of said time instants and concerning both the dog and its leader.

It cannot be excluded that in different embodiments of the method of the invention the values measured and stored are only latitude and longitude, while the altitude is measured at a later stage during the search, inputting and processing said measured values in a data processing application of the GIS type.

Regarding the time interval between one measurement and the successive one, it is preferably but not necessarily of one second. It cannot be excluded, however, that in different embodiments of the method of the invention said time interval lasts more or less than one second.

Obviously, the shorter the time between one measurement and the other, the higher the precision of the measurement and storage of the dog's and the leader's positions during the search.

In a particular embodiment of the method of the invention also the guinea pig **18** may be equipped with a positioning device, so that it would be possible to record the layout of the route covered by the same guinea pig **18** in order to reach the predefined point within the work area **11**. The usefulness of said further measurement will be explained below.

According to the preferred embodiment of the method of the invention, furthermore, the values of temperature, humidity and atmospheric pressure within the work area **11** in which the search is performed are measured and stored.

Said values are preferably but not necessarily measured at the level of the geographic coordinates of the dog and the leader, at the same instants when the above mentioned GNSS data are measured.

In an alternative embodiment of the invention, said measurement of the temperature, humidity and pressure may be made only at the level of the geographical coordinates of the dog.

In further embodiments of the method of the invention the measurement and storage of the temperature, humidity and pressure values may be carried out at the level of sample points within the work area before, during and/or after the search step performed by the dog-man pair.

Furthermore, in different embodiments of the method of the invention only one among the temperature, humidity and pressure values may be measured, or alternatively various combinations of the same may be measured.

Finally, in alternative embodiments of the method of the invention none of the above mentioned values may be measured and stored.

The preferred embodiment of the invention, furthermore, comprises an operation of measurement and storage of the wind direction and speed at the geographical point where said guinea pig **18** is located.

It cannot be excluded, however, that in different embodiments of the method of the invention the wind direction and speed at other geographical points within the work area **11** may be measured and stored, for example the points where the dog passes.

In alternative embodiments of the method of the invention, furthermore, said measurement and said storage of the wind direction and speed values may also be omitted.

Again, according to the method of the invention it is also possible to measure and store data regarding the weather conditions and the type and conditions of the ground on which the search is performed by the dog-man pair.

Even in this case, in different embodiments of the method of the invention said last measurement and storage steps may be omitted.

According to the method of the invention, once all or part of the measurements described above have been completed, in particular those concerning the GNSS data of the dog and its leader, these data are transferred to a processing device to be successively processed and interpreted.

Preferably but not necessarily, said transfer is carried out at the end of the search step performed by the dog-man pair.

However, it cannot be excluded that said transfer step may be carried out during the search step according to predefined time intervals, for example when the dog-man pair reaches intermediate positions within the work area **11**. Furthermore, according to the preferred embodiment of the method of the invention, while said transfer step is performed the characteristic data of the guinea pig **18**, such as its age, ethnic group and/or sex, are also input in the processing device.

The importance of these characteristics for the performance of the method of the invention will be explained below.

At this point, in the successive step of the method of the invention said GNSS data concerning the dog and its leader are compared and transferred to the data processing device.

In particular, said comparison is performed by processing the latitude and longitude data of the dog and its leader so as to define a graph **1** of the instant distance **2** between the dog and its leader for each one of the measurements previously made.

Furthermore, said processing makes it possible to define the average distance **3** between the dog and its leader for the whole duration of the search.

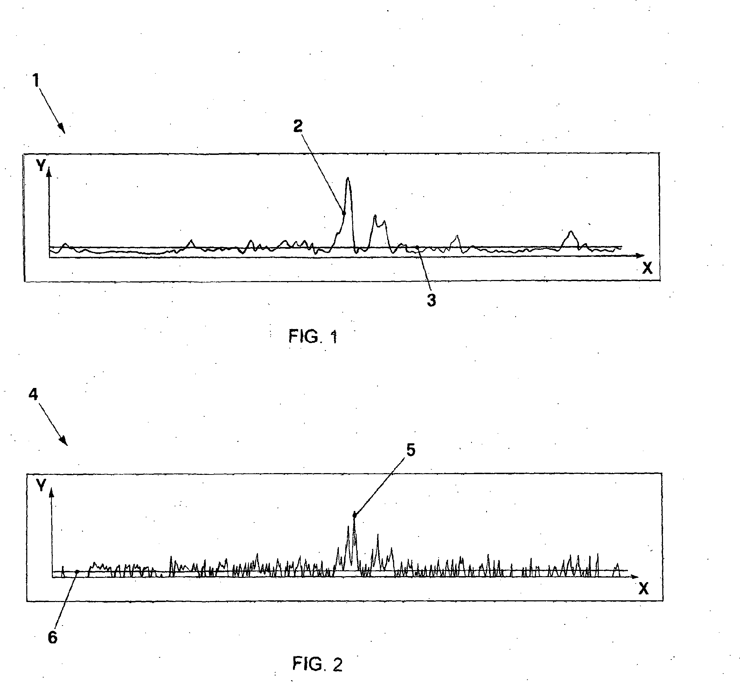

An example of said graph **1** of the instant distances **2** and the average distance **3** is shown in Figure 1.

In the same way, according to the preferred embodiment of the invention in this comparison step the latitude and longitude data concerning the dog are processed to define a graph **4** of the instant speeds **5** of the dog for each one of the measurements made during the search.

Furthermore said graph **4**, as can be seen in Figure 2, shows the value of the average speed **6** of the dog for the whole duration of the search.

Furthermore, according to the invention, preferably but not necessarily said comparison step includes the definition and graphic superimposition of the layouts **7** and **8** of the routes defined by the longitude and latitude values concerning the dog and its leader, as can be seen in the example of Figure 3. In addition to the above, in the graph **9** the previously defined perimeter **10** of the work area **11** is superimposed to the already superimposed layouts **7** and **8**, in such a way as to verify, during the successive interpreting step, which is described in greater detail below, the degree of coverage of said work area **11** by the dog-man pair.

Again, the preferred embodiment of the method of the invention includes the definition of the graph **12** of the altitude curve **13** corresponding to the route of the dog during the search, an example of which is shown in Figure 4.

In particular, in the preferred embodiment of the invention described herein said graph **12** is obtained from the altitude values measured directly during the search step, as previously stated.

However, in a different embodiment of the invention, said graph **12** of the altitude curve **13** of the dog may be obtained by using the latitude and longitude values obtained from the direct measurements made on the dog during the search and successively input and processed by means of a data processing application of the GIS type, for example Google Earth ®.

Furthermore, in alternative embodiments of the method of the invention, the calculation and/or definition of the graph **12** of the altitude curve may be omitted.

The last step of the method of the invention is constituted by the interpretation of all or part of the measured data, which have been stored and transferred to the above mentioned data processing device, and of the above mentioned graphs, so as to plan the activities necessary to improve the performance of the dog-man pair, which the latter must carry out in order to better its reliability. In particular, using the graph **9** regarding the superimposition of the layouts **7** and **8** of the routes of the dog and the leader within the perimeter **10** of the work area **11** of Figure 3, together with the graph **1** regarding the instant distances **2** and the average distance **3** between the dog and the leader of Figure 1, it is possible to understand whether the dog has performed its search in an appropriate manner, covering in the best possible way all the above mentioned work area **11**, in relation to the position of its leader at the various time instants when the measurements were made.

In fact, it is possible to understand if the dog was too distant from, at a suitable distance from or too near its leader at each individual measurement instant and during the entire search.

Said assessment can be more reliable if, as mentioned above, also the layout of the route of the guinea pig **18** has been recorded. In fact, knowing the layout of the route of the guinea pig **18**, it is possible to assess if the dog has behaved correctly within the work area **11**, that is, if it has followed its leader and the smell of the guinea pig **18** diffused in the air, or if it has worked incorrectly, smelling the ground and consequently following the smell left by the guinea pig **18** along its route.

In this last case, once the data have been interpreted, it is possible to plan the activities necessary to improve the operating efficiency of the dog-man pair which are most suitable for eliminating the error described above. Furthermore, said assessment, obtained with the method of the invention, is even more precise and reliable, as in the preferred embodiment of the invention the data of the instant distance **2** is interpreted taking in consideration also the scent cone **14** that develops within the work area **11** and the specific measurement instants.

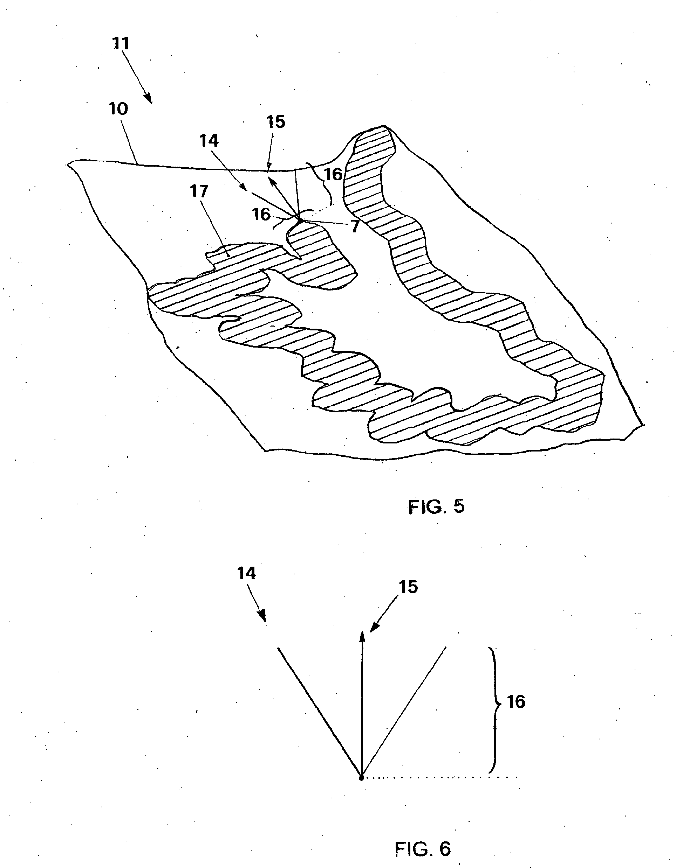

In fact, with said scent cone **14**, a representation of which is shown in Figure 5, it is possible to understand the actual ability of a specific smell to diffuse in the surrounding space.

It is known, in fact, that the ability of a dog to detect a smell in a specific area directly depends on the above mentioned scent cone.

Therefore, the measurement of the wind direction and speed as described above makes it possible to define the direction **15** and height **16** of said scent cone **14**, as shown in Figure 5, which in turn are used to assess the correct coverage of the work area **11** by the dog.

In particular, according to the preferred embodiment of the method of the invention, said data of the scent cone **14** are taken in consideration to project on the dog's route, in the direction opposite the direction **15** of the above mentioned scent cone **14**, an area **17** whose width is equal to the height **16** of the same scent cone **14**, as shown in Figure 6.

Said projection area **17** most probably corresponds to the area covered by the dog, even if not actually visited by the same.

Again, according to the preferred embodiment of the method of the invention, also the value of the atmospheric pressure makes it possible to assess more precisely the good or bad coverage of the work area **11** by the dog.

In fact, high pressure thrusts the smells downwards, so in this case the dog should get nearer the guinea pig in order to be able to perceive its presence. On the contrary, if the pressure is low the smell raises from the ground and thus the dog can perceive the smell of the guinea pig from a greater distance than in the case of high pressure.

Furthermore, as is known, the intensity and type of the smell sent out by the guinea pig **18**, and therefore the dog's ability to perceive it, depend on the nature of the guinea pig **18**.

In particular, the smell of the guinea pig **18** depends on its sex, ethnic group etc.

Therefore, the knowledge and storage also of said data concerning the guinea pig **18** using the method of the invention make it possible to interpret in a still more precise and correct manner the graph **1** of the instant distances **2** and average distance **3** between the dog and the leader of Figure 1, as well as the graph **9** of the layouts **7** and **8** of the dog and the same leader within the work area **11** of Figure 3.

With the graph of Figure 3 it is also possible to understand whether the route **8** chosen by the leader within the work area **11** is as appropriate as possible to allow the dog to cover said area **11** in an optimal way.

Concerning the graph **4** of the instant speeds **5** and average speed **6** of the dog of Figure 2, it makes it possible to understand the degree of tiredness of the dog itself.

Said graph **4**, according to the preferred embodiment of the invention, must be interpreted together with the graph **12** of the altitude curve of Figure 4.

In fact, taking in consideration only said graph **4** of Figure 2, the low speed points may all be wrongly interpreted as moments of tiredness of the dog. However, the lower speed of the dog depends on its tiredness but also on the varying altitude of the ground covered by the dog.

For example, in the case where the dog is slowing down on a plain, which is easy to understand through the compared reading of the graph **4** of the instant speeds **5** of Figure 2 and of the graph **12** of the altitude curve **13** of Figure 4, it is highly probable that the dog is tired.

On the other hand, in the case where a slowdown of the dog is recorded but the altitude value increases, this behaviour of the dog must be interpreted as normal, as the dog is walking uphill.

The interpretation of the graph **4** of the speed is made even more correct also thanks to the data on the type of ground and the conditions of the same.

In fact, for example, in the case where in the graph **4** of the instant speeds **5** there is an instant where the speed of the dog decreases, this must not be interpreted as a sign of tiredness if in that moment the dog passes from a bleak area to a woodland area.

On the contrary, if the dog slows down and the ground remains the same, this lower speed must be interpreted as an anomaly.

The same applies if there is a change in the conditions of the ground, for example from dry to wet or vice versa.

Therefore, according to the preferred embodiment of the method of the invention said interpretation step, which takes in consideration all the above mentioned data, makes it possible to understand the actual reasons for a change in the speed of the dog.

Furthermore, the variation in the dog's performance, in particular the variation in its speed, depends also on the temperature and humidity of the work area **11**.

Therefore, in the case where for the same dog-man pair, tested in different days under different temperature and humidity conditions, different performance levels are found, said inconsistent performance of the dog-man pair must not necessarily be considered an anomaly or a sign of the intrinsic unreliability of the pair, as said performance may have been affected by different weather conditions.

In different embodiments of the method of the invention, said graphs **1** and **4** of the instant distances **2** of Figure 1, of the average speed **6** and instant speeds **5** of Figure 2 and the graph **9** of the superimposed layouts **7** and **8** of Figure 3 may be interpreted without taking in consideration one or more of the data described above.

Obviously, said embodiments give less precise and less objective assessments than the preferred embodiment of the method of the invention.

Advantageously, the assessment obtained with the method of the invention makes it possible to identify the best and most suitable exercises to improve the performance of the tested dog-man pair, in a shorter time compared to the results obtained up to now with the assessment techniques of the known art. Regarding the steps of the method of the invention of processing and interpreting the measured data and planning the activities necessary to improve the reliability of the dog-man pair, these are carried out by a code portion belonging to data processing software, when said software is run in said data processing device.

For this reason the above mentioned data processing software is part of the invention.

Furthermore, as already explained above, in order to be able to implement the method of the invention described in detail above, it is necessary to use a kit suited to assess the reliability of a dog-man pair, which is also part of the invention.

In particular, said kit **100** of the invention comprises at least two positioning devices **101** and **102** for measuring and storing GNSS data, one of which is suited to be applied to the dog **C** belonging to the above mentioned dog-man pair while the second device must be worn by the human leader **U**.

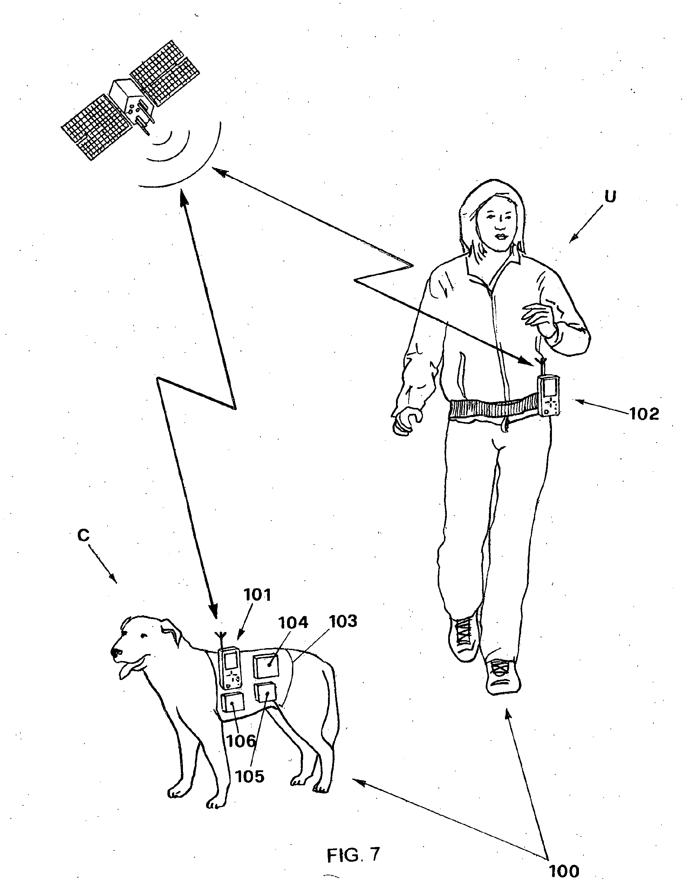

According to the preferred embodiment of the invention, as can be observed in Figure 7, the positioning device **101** that must be applied to the dog **C** is constituted by a bib **103** that does not interfere with the freedom of movement of the same dog **C**.

Preferably but not necessarily, said bib **103**, in addition to providing for measuring the dog's GNSS data, also comprises devices for measuring the temperature **104**, devices for measuring the atmospheric pressure **105** and devices for measuring the humidity **106**.

The above clearly shows that the method of the invention, the data processing software of the invention and the kit of the invention all achieve the set objects. In particular, the invention achieves the object to provide a method for assessing the reliability of a dog-man pair that is based on objective measurements and data.

Consequently, the present invention also achieves the object to provide a method that makes it possible to obtain an objective and consistent assessment of the reliability of a dog-man pair, given the same performance of the dog-man pair/technical dog-man pair.

The present invention also achieves the object to provide a method that makes it possible to plan one or more activities for the dog-man pair, which allow the latter to actually improve its reliability in a shorter time than is presently needed when using the assessing methods of the known art.

On implementation, the method, the data processing software and the kit that are the subjects of the invention may undergo changes that, though not illustrated or described herein, shall nonetheless be covered by the present patent, provided that they come within the scope of the claims that follow. Where technical features mentioned in any claim are followed by reference signs, those reference signs have been included for the sole purpose of increasing the intelligibility of the claims and accordingly such reference signs do not have any limiting effect on the protection of each element identified by way of example by such reference signs.

## Claims

1. Method for assessing the reliability of a dog-man pair, preferably a technical dog-man pair, constituted by a dog (C) and a human leader (U), both wearing a positioning device suited to measure and store GNSS data, **characterized in that** it comprises the following steps:
- defining a work area (11) inside which said dog-man pair must work;
- positioning in said work area (11) at least one guinea pig (18) suited to be found by said dog-man pair;
- starting the search for said at least one guinea pig (18) by said dog-man pair, measuring and storing at the same time instants and according to predefined time intervals said GNSS data concerning said dog (C) and said leader (U) through said GNSS positioning devices;
- transferring said GNSS data concerning said dog (C) and said leader (U) to a data processing device;
- processing latitude and longitude values belonging to said GNSS data of said dog (C) and said leader (U) in such a way as to define within said work area (11) the layouts (7, 8) of the routes of said dog (C) and said leader (U), respectively, and to define a graph (1) of the instant distance (2) between said dog (C) and said leader (U) for each one of said instants of time during said search;
- interpreting said layouts (7, 8) and said graph (1) of the instant distance (2) in such a way as to define the degree of coverage of said work area (11) granted by said dog (C) in relation to the position of said leader (U) and to define the degree of suitability of the route chosen by the leader (U) within said work area (11);
- planning the activities necessary to improve the operating efficiency of said dog-man pair based on said interpretation of said layouts (7, 8) and said graph (1) of the instant distance (2).

2. Method according to claim 1), **characterized in that** said step of interpreting said graph (1) of said instant distance (2) includes the assessment, instant by instant, of the suitability of the distance of said dog (C) from said leader (U).

3. Method according to any of the preceding claims, **characterized in that** said processing step includes the definition, through said latitude and longitude values taken from said GNSS data of said dog (C) and said leader (U), of the value of the average distance (3) between said dog (C) and said leader (U) during the entire duration of said search, said average distance (3) being taken in consideration during said interpreting step to define the degree of coverage of said work area (11) granted by said dog (C) in relation to the position of said leader (U).

4. Method according to any of the preceding claims, **characterized in that** it includes an operation of measuring and storing the direction and the speed of the wind at the level of the geographical point where said guinea pig (18) is located, in order to define the height (16) and the direction (15) of the scent cone (14) within said work area (11), said scent cone (14) being projected during said processing step on every point of said layout (7) of the route of said dog (C) so as to determine an area (17) whose width is equal to said height (16) along said layout (7) in order to define, during said interpreting step, the degree of coverage of said work area (11) granted by said dog (C).

5. Method according to any of the preceding claims, **characterized in that** said processing step includes the definition, through said latitude and longitude values, of a graph (4) of the instant speed (5) and a graph (12) of the altitude curve (13) regarding the route covered by said dog (C) during the entire duration of said search, said graphs (4, 12) being interpreted together in order to define the degree of tiredness of said dog (C) for each time instant during said search.

6. Method according to claim 5), **characterized in that** it includes the measurement and storage of data on the type of ground and the conditions of said ground at the level of one or more geographical points within said work area (11), said type and said conditions of said ground being taken in consideration to define said degree of tiredness of said dog (C) during said interpreting step.

7. Method according to any of the preceding claims, **characterized in that** it includes the measurement and storage of the temperature, humidity and atmospheric pressure values at the geographical coordinates of said dog (C) at said time instants, said temperature, humidity and atmospheric pressure values being taken in consideration during said interpreting step to define said degree of tiredness of said dog (C).

8. Method according to any of the preceding claims, **characterized in that** said GNSS data are taken by means of positioning devices of the GPS type.

9. Method according to any of the preceding claims, **characterized in that** also said at least one guinea pig (18) is equipped with a positioning device so as to define the layout of the route covered by said guinea pig (18) during said positioning step in the predefined point within said work area (11), said layout of the route of said guinea pig (18) being taken in consideration during said interpreting step to define the degree of coverage of said work area (11) granted by said dog (C).

10. Method according to claim 9), **characterized in that** said interpreting step includes verifying whether said dog (C) follows the layout of the route of said guinea pig (18) or not and, in the case where said dog (C) follows said layout of the route of said guinea pig (18), planning the activities necessary to correct said action.

11. Kit (100) adapted to assess the reliability of a dog-man unit according to any of the preceding claims, of the type comprising two positioning devices (101, 102) for measuring and storing GNSS data, wherein one of said positioning devices (101) is applied to the dog (C) of said dog-man pair while the second positioning device (102) is worn by the human leader (U) of said dog-man pair, **characterized in that** said positioning device (101) applied to said dog (C) is fixed to a bib (103) suited to be worn by said dog (C).

12. Kit according to claim 11), **characterized in that** said bib (103) comprises a device for measuring the temperature (104), a device for measuring the atmospheric pressure (105) and a device for measuring the humidity (106).

13. Data processing software directly loadable in the memory of an electronic data processing device, comprising a software code portion capable of performing the steps of processing, interpreting and planning belonging to the method according to any of the claims from 1) to 10) when said software is run in said electronic data processing device.

## Patentansprüche

1. Methode zur Bewertung der Verlässlichkeit eines Mensch/Hund-Teams, vorzugsweise eines technischen Mensch/Hund-Teams, bestehend aus einem Hund (C) und einem menschlichen Führer (U), die beide eine Positionierungsvorrichtung tragen, welche geeignet ist, GNSS-Daten zu erfassen und zu speichern, **dadurch gekennzeichnet, dass** sie folgende Schritte umfasst:
- Definition eines Einsatzgebiets (11), in dem das besagte Mensch/Hund-Team arbeiten soll;
- Positionierung, in dem besagten Einsatzgebiet (11), von wenigstens einem Versuchskaninchen (18), das geeignet ist, durch das besagte Mensch/Hund-Team gefunden zu werden;
- Aufnahme der Suche nach dem besagten, wenigstens einen Versuchskaninchen (18) durch das besagte Mensch/Hund-Team, unter Erfassung und Speicherung der besagten GNSS-Daten über den besagten Hund (C) und den besagten Führer (U) mittels der besagten GNSS-Positionierungsvorrichtungen in gleichzeitigen Momenten und gemäß vorbestimmter Zeitintervalle;
- Übermittlung der besagten GNSS-Daten über den besagten Hund (C) und den besagten Führer (U) an eine Datenverarbeitungsvorrichtung;
- Verarbeitung der Breiten- und Längenwerte der besagten GNSS-Daten des besagten Hunds (C) und des besagten Führers (U) in solcher Weise, dass innerhalb des besagten Einsatzgebiets (11) die Streckenverläufe (7, 8) der jeweiligen Wege des besagten Hunds (C) und des besagten Führers (U) definiert werden, und dass eine graphische Darstellung (1) der momentanen Entfernung (2) zwischen dem besagten Hund (C) und dem besagten Führer (U) für jeden der besagten Zeitmomente während der besagten Suche definiert wird;
- Interpretation der besagten Streckenverläufe (7, 8) und der besagten graphischen Darstellung (1) der momentanen Entfernung (2) auf solche Weise, dass der Grad der durch den besagten Hund (C) erreichten Abdeckung des besagten Einsatzgebiets (11) in Bezug auf die Position des besagten Führers (U) definiert wird, und dass der Grad der Eignung des vom Führer (U) gewählten Wegs innerhalb des besagten Einsatzgebiets (11) definiert wird;
- Planung der zur Verbesserung der Arbeitseffizienz des besagten Mensch/Hund-Teams erforderlichen Aktivitäten auf Grundlage der besagten Interpretation der besagten Streckenverläufe (7, 8) und der besagten graphischen Darstellung (1) der momentanen Entfernung (2).

2. Methode gemäß Patentanspruch 1), **dadurch gekennzeichnet, dass** der besagte Schritt der Interpretation der besagten, graphischen Darstellung (1) der besagten, momentanen Entfernung (2) die Bewertung der Eignung der Entfernung des besagten Hunds (C) von dem besagten Führer (U) Moment für Moment einschließt.

3. Methode gemäß eines jeden der vorstehenden Patentansprüche, **dadurch gekennzeichnet, dass** der besagte Schritt der Verarbeitung die Definition des Werts der durchschnittlichen Entfernung (3) zwischen dem besagten Hund (C) und dem besagten Führer (U) während der gesamten Dauer der besagten Suche mittels der besagten Breiten- und Längenwerte aus den besagten GNSS-Daten des besagten Hunds (C) und des besagten Führers (U) umfasst, wobei die besagte, durchschnittliche Entfernung (3) während des besagten Schritts der Interpretation zur Definition des Grads der durch den besagten Hund (C) erreichten Abdeckung des besagten Einsatzgebietes (11) bezüglich der Position des besagten Führers (U) berücksichtigt wird.

4. Methode gemäß eines jeden der vorstehenden Patentansprüche, **dadurch gekennzeichnet, dass** sie einen Vorgang der Erfassung und Speicherung der Windrichtung und -geschwindigkeit auf der Ebene des geographischen Punkts, an dem sich das besagte Versuchskaninchen (18) befindet, umfasst, um die Höhe (16) und die Richtung (15) des Geruchskegels (14) innerhalb des besagten Einsatzgebiets (11) zu definieren, wobei der besagte Geruchskegel (14) während des besagten Verarbeitungsschritts auf jeden Punkt des besagten Streckenverlaufs (7) des Wegs des besagten Hunds (C) projiziert wird, um einen Bereich (17) entlang des besagten Streckenverlaufs (7) zu bestimmen, dessen Weite der besagten Höhe (16) entspricht, um während des besagten Schritts der Interpretation den Grad der durch den besagten Hund (C) erreichten Abdeckung des besagten Einsatzgebiets (11) zu definieren.

5. Methode gemäß eines jeden der vorstehenden Patentansprüche, **dadurch gekennzeichnet, dass** der besagte Schritt der Verarbeitung die Definition mittels der besagten Breiten- und Längenwerte einer graphischen Darstellung (4) der momentanen Geschwindigkeit (5) und einer graphischen Darstellung (12) der Höhenkurve (13) bezüglich des während der gesamten Dauer der besagten Suche durch den besagten Hund (C) abgedeckten Wegs umfasst, wobei die besagten graphischen Darstellungen (4, 12) zusammen interpretiert werden, um den Grad der Müdigkeit des besagten Hunds (C) für jeden Zeitmoment während der besagte Suche zu definieren.

6. Methode gemäß Patentanspruch 5), **dadurch gekennzeichnet, dass** sie die Erfassung und Speicherung von Daten zum Bodentyp und zu den Bedingungen des besagten Bodens auf Ebene eines oder mehrerer geographischer Punkte innerhalb des besagten Einsatzgebiets (11) umfasst, wobei der besagte Typ und die besagten Bedingungen des besagten Bodens berücksichtigt werden, um während des besagten Interpretationsschritts den besagten Grad der Müdigkeit des besagten Hunds (C) zu definieren.

7. Methode gemäß eines jeden der vorstehenden Patentansprüche, **dadurch gekennzeichnet, dass** sie die Erfassung und Speicherung der Temperatur-, Feuchtigkeits- und der atmosphärischen Druckwerte an den geographischen Koordinaten des besagten Hunds (C) in den besagten Zeitmomenten umfasst, wobei die besagten Temperatur-, Feuchtigkeits- und atmosphärischen Druckwerte während des besagten Interpretationsschritt berücksichtigt werden, um den Grad der Müdigkeit des besagten Hunds (C) zu definieren.

8. Methode gemäß eines jeden der vorstehenden Patentansprüche, **dadurch gekennzeichnet, dass** die besagten GNSS Daten anhand von Positionierungsvorrichtungen vom GPS-Typ erfasst werden.

9. Methode gemäß eines jeden der vorstehenden Patentansprüche, **dadurch gekennzeichnet, dass** auch das besagte, wenigstens eine Versuchskaninchen (18) mit einer Positionierungsvorrichtung versehen ist, um den Streckenverlauf des von dem besagten Versuchskaninchen (18) während des besagten Positionierungsschritts zurückgelegten Wegs an dem vorbestimmten Punkt innerhalb des besagten Einsatzgebiets (11) zu definieren, wobei der besagte Streckenverlauf des Wegs des besagten Versuchskaninchens (18) während des besagten Interpretationsschritts berücksichtigt wird, um den Grad der durch den besagten Hund (C) erreichten Abdeckung des besagten Einsatzgebietes (11) zu definieren.

10. Methode gemäß Patentanspruch 9), **dadurch gekennzeichnet, dass** der besagte Interpretationsschritt die Prüfung umfasst, ob der besagte Hund (C) dem Streckenverlauf des Wegs des besagten Versuchskaninchens (18) folgt oder nicht, und falls der besagte Hund (C) dem besagten Streckenverlauf des Wegs des besagten Versuchskaninchens (18) folgt, die Planung der zur Korrektur dieser Handlung erforderlichen Maßnahmen umfasst.

11. Kit (100), der dazu geeignet ist, die Verlässlichkeit eines Mensch/Hund-Teams gemäß eines jeden der vorstehenden Patentansprüche zu bewerten, von dem Typ, der zwei Positionierungsvorrichtungen (101, 102) zur Erfassung und Speicherung von GNSS-Daten umfasst, wobei eine der besagten Positionierungsvorrichtungen (101) am Hund (C) des besagten Mensch/Hund-Teams angebracht ist, und die zweite Positionierungsvorrichtung (102) von dem menschlichen Führer (U) des besagten Mensch/Hund-Teams getragen wird, **dadurch gekennzeichnet, dass** die besagte Positionierungsvorrichtung (101), die an dem besagten Hund (C) angebracht ist, an einem Brustlatz (103) befestigt ist, der dazu geeignet ist, von dem besagten Hund (C) getragen zu werden.

12. Kit gemäß Patentanspruch 11), **dadurch gekennzeichnet, dass** der besagte Brustlatz (103) eine Vorrichtung zur Messung der Temperatur (104), eine Vorrichtung zur Messung des atmosphärischen Drucks (105) und eine Vorrichtung zur Messung der Feuchtigkeit (106) umfasst.

13. Datenverarbeitungssoftware, die direkt in den Speicher eines elektronischen Datenverarbeitungsgeräts geladen werden kann, einen Softwarecodeabschnitt enthaltend, der in der Lage ist, die zu der Methode gemäß eines jeden der vorstehenden Patentansprüche von 1) bis 10) gehörigen Schritte der Verarbeitung, Interpretation und Planung auszuführen, wenn die besagte Software in dem besagten elektronischen Datenverarbeitungsgerät läuft.

## Revendications

1. Méthode pour l'évaluation de la fiabilité d'une unité cynophile, préférablement d'une unité cynotechnique, constitué d'un chien (C) et d'un conducteur humain (U), les deux étant dotés d'un dispositif de positionnement pour la détection et la mémorisation de données GNSS, **caractérisée en ce qu'**elle prévoit les phases suivantes:
- définir une zone de travail (11) à l'intérieur de laquelle ladite unité cynophile doit travailler;
- positionner dans ladite zone de travail (11) au moins un cobaye (18) apte à être recherché par ladite unité cynophile;
- commencer la recherche dudit au moins un cobaye (18) de la part de ladite unité cynophile, en détectant et mémorisant, dans les mêmes moments de temps et selon des intervalles de temps préétablis, lesdites données GNSS dudit chien (C) et dudit conducteur (U) au moyen desdits dispositifs de positionnement GNSS;
- transférer lesdites données GNSS dudit chien (C) et dudit conducteur (U) à un dispositif pour le traitement des données;
- élaborer des valeurs de latitude et longitude appartenant auxdites données GNSS dudit chien (C) et dudit conducteur (U) de façon à définir à l'intérieur de ladite zone de travail (11) les tracés (7, 8) des parcours respectivement effectués par ledit chien (C) et par ledit conducteur (U), et de façon à définir un graphique (1) de la distance instantanée (2) entre ledit chien (C) et ledit conducteur (U) pour chacun desdits instants de temps durant ladite recherche;
- interpréter lesdits tracés (7, 8) et ledit graphique (1) de la distance instantanée (2) de façon à définir le degré de couverture de ladite zone de travail (11) poursuivi par ledit chien (C) par rapport à la position dudit conducteur (U) et de façon à définir le degré d'adaptabilité du parcours choisi par le conducteur (U) à l'intérieur de ladite zone de travail (11);
- programmer les activités nécessaires pour améliorer l'efficacité opérationnelle de ladite unité cynophile selon ladite interprétation desdits tracés (7, 8) et dudit graphique (1) de la distance instantanée (2).

2. Méthode selon la revendication 1), **caractérisée en ce que** ladite phase d'interprétation dudit graphique (1) de ladite distance instantanée (2) comprend l'évaluation instant par instant de l'adaptabilité de la distance dudit chien (C) dudit conducteur (U).

3. Méthode selon l'une quelconque des revendications précédentes, **caractérisée en ce que** ladite phase d'élaboration comprend la définition, au moyen desdites valeurs de latitude et longitude prises desdites données GNSS dudit chien (C) et dudit conducteur (U), de la valeur de la distance moyenne (3) entre ledit chien (C) et ledit conducteur (U) pendant toute la durée de ladite recherche, ladite distance moyenne (3) étant prise en considération durant ladite phase d'interprétation pour définir le degré de couverture de ladite zone de travail (11) poursuivi par ledit chien (C) par rapport à la position dudit conducteur (U).

4. Méthode selon l'une quelconque des revendications précédentes, **caractérisée en ce qu'**elle comprend une opération de détection et mémorisation de la direction et de la vitesse du vent à hauteur du point géographique où se trouve ledit cobaye (18), de façon à définir la hauteur (16) et la direction (15) du cône d'odeur (14) à l'intérieur de ladite zone de travail (11), ledit cône d'odeur (14) étant projeté durant ladite phase d'élaboration sur chaque point dudit tracé (7) parcouru par ledit chien (C) de façon à déterminer une zone (17) dont la largeur est égale à ladite hauteur (16) le long dudit tracé (7) pour définir, durant ladite phase d'interprétation, le degré de couverture de ladite zone de travail (11) poursuivi par ledit chien (C).

5. Méthode selon l'une quelconque des revendications précédentes, **caractérisée en ce que** ladite phase d'élaboration comprend la définition, au moyen desdites valeurs de latitude et longitude, d'un graphique (4) de la vitesse instantanée (5) et d'un graphique (12) de la courbe altimétrique (13) relatifs au parcours effectué par ledit chien (C) durant toute la durée de ladite recherche, lesdits graphiques (4, 12) étant interprétés ensemble afin de définir le degré de fatigue dudit chien (C) pour chaque instant de temps de ladite recherche.

6. Méthode selon la revendication 5), **caractérisée en ce qu'**elle comprend la détection et la mémorisation de données sur le type de terrain et sur les conditions dudit terrain à hauteur d'un ou plusieurs points géographiques à l'intérieur de ladite zone de travail (11), ledit type et lesdites conditions dudit terrain étant pris en considération pour définir ledit degré de fatigue dudit chien (C) durant ladite phase d'interprétation.

7. Méthode selon l'une quelconque des revendications précédentes, **caractérisée en ce qu'**elle comprend la détection et la mémorisation des valeurs de température, humidité et pression atmosphérique à hauteur des coordonnées géographiques dudit chien (C) dans lesdits instants de temps, lesdites valeurs de température, humidité et pression atmosphérique étant prises en considération durant ladite phase d'interprétation pour définir ledit degré de fatigue dudit chien (C).

8. Méthode selon l'une quelconque des revendications précédentes, **caractérisée en ce que** lesdites données GNSS sont détectées au moyen de dispositifs de positionnement de type GPS.

9. Méthode selon l'une quelconque des revendications précédentes, **caractérisée en ce que** même ledit au moins un cobaye (18) est doté d'un dispositif de positionnement de façon à définir le tracé du parcours effectué par ledit cobaye (18) durant ladite phase de positionnement dans le point préétabli à l'intérieur de ladite zone de travail (11), ledit tracé du parcours dudit cobaye (18) étant pris en considération durant ladite phase d'interprétation pour définir le degré de couverture de ladite zone de travail (11) poursuivi par ledit chien (C).

10. Méthode selon la revendication 9), **caractérisée en ce que** ladite phase d'interprétation comprend la vérification si ledit chien (C) suit ou non le tracé du parcours effectué par ledit cobaye (18) et, au cas où ledit chien (C) suivrait ledit tracé du parcours effectué par ledit cobaye (18), programmer les activités nécessaires pour corriger ladite action.

11. Kit (100) indiqué pour l'évaluation de l'adaptabilité d'une unité cynophile selon l'une quelconque des revendications précédentes, du type comprenant deux dispositifs de positionnement (101, 102) pour la détection et la mémorisation des données GNSS, où l'un desdits dispositifs de positionnement (101) est appliqué au chien (C) de ladite unité cynophile et le deuxième dispositif de positionnement (102) est appliqué au conducteur humain (U) de ladite unité cynophile, **caractérisé en ce que** ledit dispositif de positionnement (101) appliqué audit chien (C) est fixé sur un dossard (103) apte à être porté par ledit chien (C).

12. Kit selon la revendication 11), **caractérisé en ce que** ledit dossard (103) comprend un dispositif pour la détection de la température (104), un dispositif pour la détection de la pression atmosphérique (105) et un dispositif pour la détection de l'humidité (106).

13. Logiciel de traitement de données directement chargeable à l'intérieur de la mémoire d'un dispositif électronique de traitement de données, comprenant une portion de code de logiciel en mesure d'effectuer les phases d'élaboration, d'interprétation et de programmation appartenant à la méthode selon l'une quelconque des revendications de 1) à 10) quand ledit logiciel est en exécution dans ledit dispositif électronique de traitement de données.
